# EUROPEAN PATENT SPECIFICATION

(11) **EP 0 396 181 B1**
(45) Date of publication and mention of the grant of the patent: **29.12.1993**
(21) Application number: 90201049.5
(22) Date of filing: 25.04.1990
(51) Int. Cl.: H02G 3/04

(54) **Duct system for electric leads, and auxiliary elements for such a system**
Kanalsystem für elektrische Leitungen und Hilfselemente dafür
Système de conduit pour fils électriques et éléments auxiliaires pour un tel système

(30) Priority: 03.05.1989 NL 8901136
(43) Date of publication of application: 07.11.1990
(73) Proprietor: B.V. Kunststoffenindustrie Attema, NL-4203 NN Gorinchem (NL)
(72) Inventor: Romijn, Jan, NL-4254 BH Sleeuwijk (NL)
(74) Representative: Mommaerts, Johan Hendrik, Dipl.-Phys.

(56) References cited:
- WO-A-88/10396
- FR-A- 2 593 973
- DEUTSCHE BAUZEITSCHRIFT - DBZ. August 1981, GUTERSLOH DE pages 1211 - 1214; "Elektro-Installationssysteme"

## Description

### Duct system for electric leads, and auxiliary elements for such a system.

The invention relates to a duct system for electric leads according to the preamble of claim 1.

Such a duct system is known from FR-A- 2 593 973. The walls of the base section of this duct system extend to the cover section when this is fitted. Special provisions have to be made if leads, i.e. individual conductors, of different groups have to be accommodated in the duct.

The crossing of leads of different groups during the fitting of a branch or making of a connection is in particular a great problem, since according to the current regulations these leads have to be in separate compartments inside the duct, and the space inside the duct for practical reasons is generally very limited.

The object of the invention is to eliminate the above-mentioned disadvantage, and to this end the invention is characterized as described in claim 1. Advantageous embodiments are described in the sub-claims.

In the duct system according to the invention, leads can be laid in the open ducts of a base section without special provisions. After the fitting of a cover section, preferably by means of a snap connection, the ducts are completely galvanically separated from each other by means of partitions on the inside of the section, while the duct walls keep the different cable groups in place.

The shape of the base section is such that by means of one or more resilient coupling elements with a C-shaped cross-section galvanically separated connections between ducts of different base sections can be formed, the transverse dimensions of these coupling elements being such that they can be clamped in and/or on a duct of the base section.

The crossing of leads of different groups, which leads are accommodated in different ducts, can be performed very simply by means of the coupling elements with a C-shaped cross-section,while the requirement that the different groups must be in separate spaces is always met.

The duct system according to the invention further comprises various other auxiliary elements, including elements for joining together the ends of duct parts which are fitted at an angle relative to each other. Such auxiliary elements, which can grip round a cover section, comprise fingers which are provided with lips adapted to grip behind the cover section, and they are particularly easy to fit by hand, but can be removed only by using a tool.

The invention is explained with reference to the drawing, in which:
Fig. 1 shows a perspective view of a base section according to the invention;
Fig. 2 shows a perspective view of a cover section according to the invention;
Fig. 3a shows a perspective view of the base section according to Fig. 1, in which a coupling element with a C-shaped cross-section is fitted in a duct;
Fig. 3b shows a perspective view of the base section according to Fig. 1, in which a coupling element with a C-shaped cross-section is fitted on a duct;
Fig. 4a shows a top view of a corner connecting element for the base and the cover section according to the invention;
Fig. 4b shows a side view and partial cross-section of the corner connecting element according to Fig. 4a;
Fig. 4c shows a bottom view of the corner connecting element according to Fig. 4a;
Fig. 5 shows a partial cross-section on an enlarged scale of the base section according to Fig. 1, the cover section according to Fig. 2, and the corner connecting element according to Fig. 4b;
Fig. 6a shows a front view of an auxiliary element for covering a terminal box or the like;
Fig. 6b shows a cross-section of the covering auxiliary element along the line VIb-VIb of Fig. 6a;
Fig. 6c shows a perspective view of detail VIc of Fig. 6b;
Fig. 7a shows a top view of a baseplate auxiliary element;
Fig. 7b shows a side view of the baseplate auxiliary element according to Fig. 7a;
Fig. 7c shows another side view of the baseplate auxiliary element according to Fig. 7a, partially in cross-section;
Fig. 8a shows a top view of a double junction box auxiliary element;
Fig. 8b shows a side view of the junction box auxiliary element according to Fig. 8a, partially in cross-section along the line VIIIb-VIIIb and
Fig. 8c shows another side view of the junction box auxiliary element according to Fig. 8a.

In the figures parts of the same kind and having the same function are indicated by the same reference numerals.

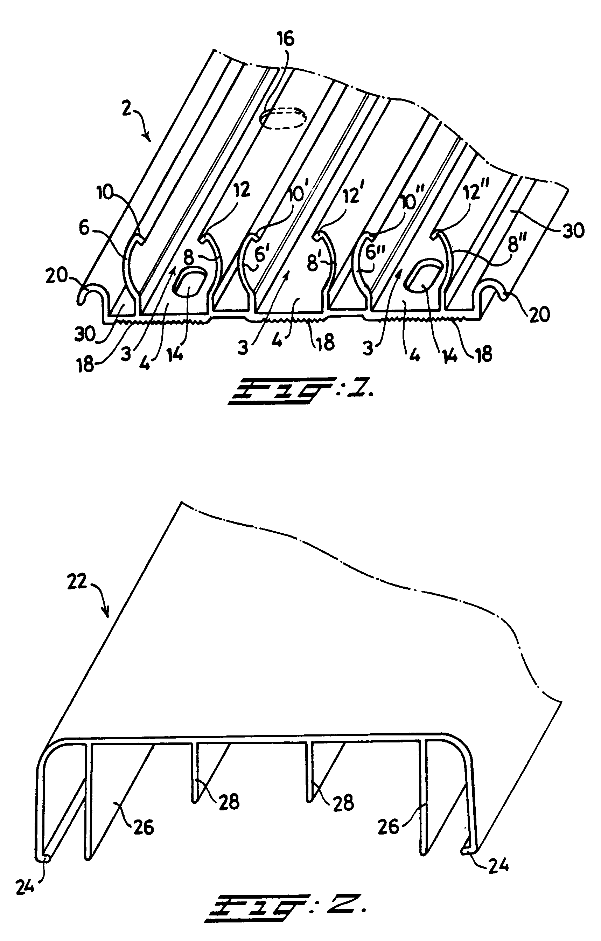

Fig. 1 shows a part of an elongated base section 2 carrying there tubular ducts 3 which are open at one side, and which are each formed by the bottom 4 of the base section 2 and curved walls 6 and 8, 6' and 8', and 6'' and 8''. Edges 10, 12, 10', 12', 10'' and 12'' of the respective curved walls 6, 8, 6', 8', 6'' and 8'' are bent inwards on either side of the open side of the duct 3 in question.

Provided at regular intervals in the bottom 4 of the base section 2, in the two outermost ducts 3, are slotted holes 14 running in the lengthwise direction of the base section 2, alternating with slotted holes 16 running in the crosswise direction of the base section 2, for fixing the base section 2 on a base, for example a wall. A moulding 18 on the bottom side of the base section 2 here ensures an increased resistance to shifting of the base section 2 in the transverse direction. It is, of course, also possible to provide the slotted holes in the bottom 4 between the ducts 3, or to use holes with a different configuration.

The base section 2 also has on either side over the entire length resilient end edges 20 which are flanged towards the bottom 4.

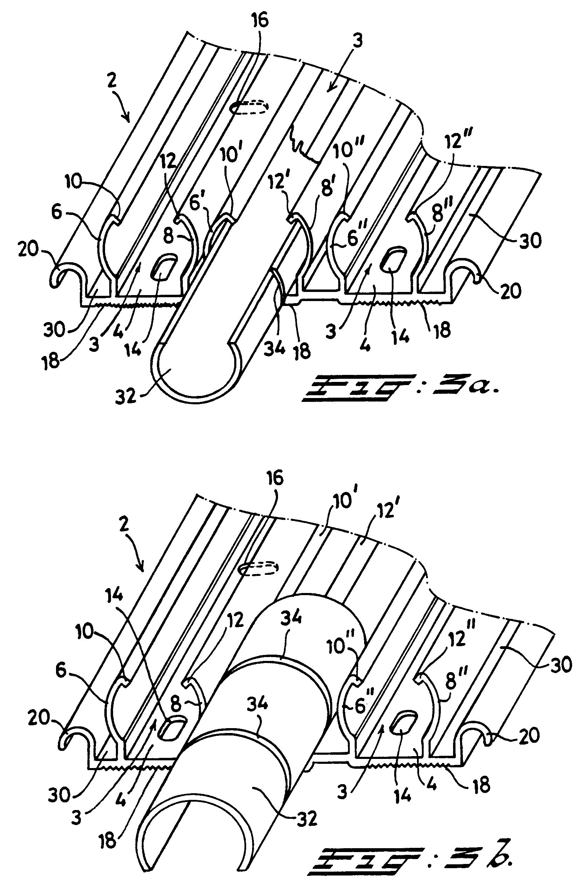

Fig. 2 shows a part of an elongated cover section 22 which matches the base section 2 and has an essentially U-shaped cross-section. The cover section 22 has on either side over the entire length hooked edges 24 which can spring slightly to the side. The distance between the two side walls of the cover section 22 is selected in such a way that it corresponds to or is slightly smaller than the distance measured over the two end edges 20 of the base section 2. If the cover section 22 is now pressed over the base section 2, something which can be carried out by hand without much trouble, the hooked edges 24 engage under the end edges 20, so that a firm connection, which can be broken only by means of tools, is produced between the two sections and a closed duct is formed.

The cover section 22 is also provided with partitions 26 and 28 running in the lengthwise direction. After the connection between the base section 2 and the cover section 22 is made, the bottom edge of both partitions 26 rests on a stop face 30 which forms part of the bottom 4 of the base section 2, as a result of which the connection is fixed. The two partitions 28 are placed in such a way that, after the above-mentioned connection is formed, they fall into the space between the adjacent ducts 3, in other words between the curved walls 6' and 8 or 6'' and 8'. In this way, after the interconnection of the base section 2 and the cover section 22, separate spaces in which leads of different groups can be laid are formed, said leads being totally galvanically separated from each other in such a way that any contact between them is ruled out, and a sufficiently long leakage path is present. If desired, the spaces between each side wall of the cover section 22 and the partition 26 immediately next to it can be used for laying, for example, weak-current lines, such as telephone cables, bell cables or aerial cables.

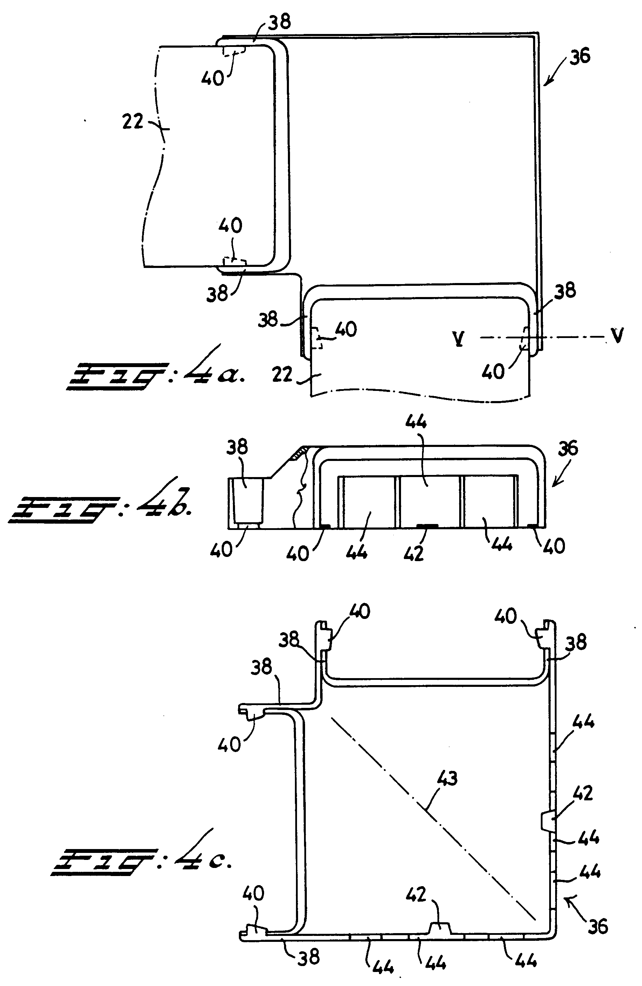

Fig. 3a illustrates how by means of a coupling element 32 of a resilient material with a C-shaped cross-section a connection can be produced in a simple manner between the ducts 3 of various pieces of base section 2. The coupling element 32 is provided with break lines 34, for example on the outside, so that it can be broken off approximately at the desired length. The coupling element 32 obtained in this way can be pushed directly into a duct 3 or pressed into the duct opening and thus, as it were, forms an extension piece of the duct 3, which can in turn be pushed into a duct 3 of a subsequent base section 2, or can be pressed into the duct opening. The edges 10' and 12' prevent rotation of the coupling element 32.

Fig. 3b illustrates a second arrangement of the coupling element 32, which is used, for example, if leads of a first group have to be crossed by leads of a second group. In such a case the duct 3 with the leads of one of the two groups is shut off over a predetermined distance at the duct opening side by the above-mentioned coupling element 32 with a C-shaped cross-section, but the latter is now clamped on the curved walls 6' and 8' of the duct 3. This is possible if the coupling element 32 is made of slightly resilient material. The crossing leads can now be laid over the coupling element 32 without any problem.

It is also pointed out that the use of the coupling element 32 in the manner of Fig. 3b can take place at any point of a base section 2. In addition, a piece of coupling element 32 fitted in such a way can serve to hold the cables in the duct 3 in question, for example if the base section is mounted on a wall, where there is the risk of the leads falling out of the duct 3 through the duct opening.

Of course, it is also possible to combine the applications of the coupling element 32 according to Figs. 3a and 3b, thus forming a closed duct by means of two coupling elements 32 lying in one another.

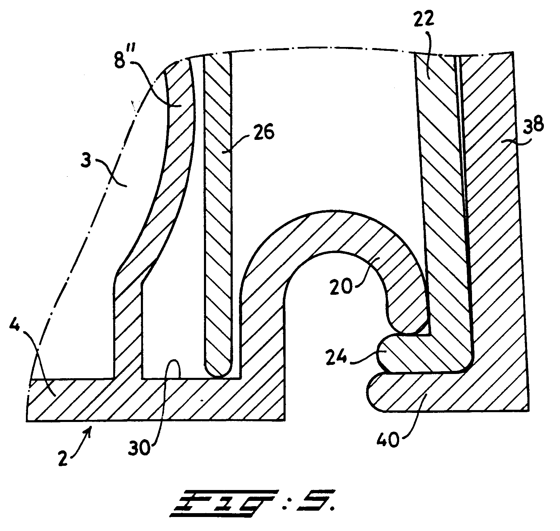

Figs. 4a, 4b and 4c show different views of a corner connecting element 36, which is representative of various other corner connecting elements not shown. The corner connecting element 36 is used to make a connection between two ducts being at right angles to each other, and to this end grips round the ends of the cover sections 22. In order to obtain a clamping connection which is easy to achieve by hand between the corner connecting element 36 and the two ducts, the corner connecting element 36 is provided with fingers 38 and lips 40 and 42. The corner connecting element 36 is pressed over the ends of the two ducts at the time of fitting, in which case the fingers 38 bend out sideways until the lips 40, 42 can snap under the hooked edge 24 of the cover section 22, for which sufficient space is present.

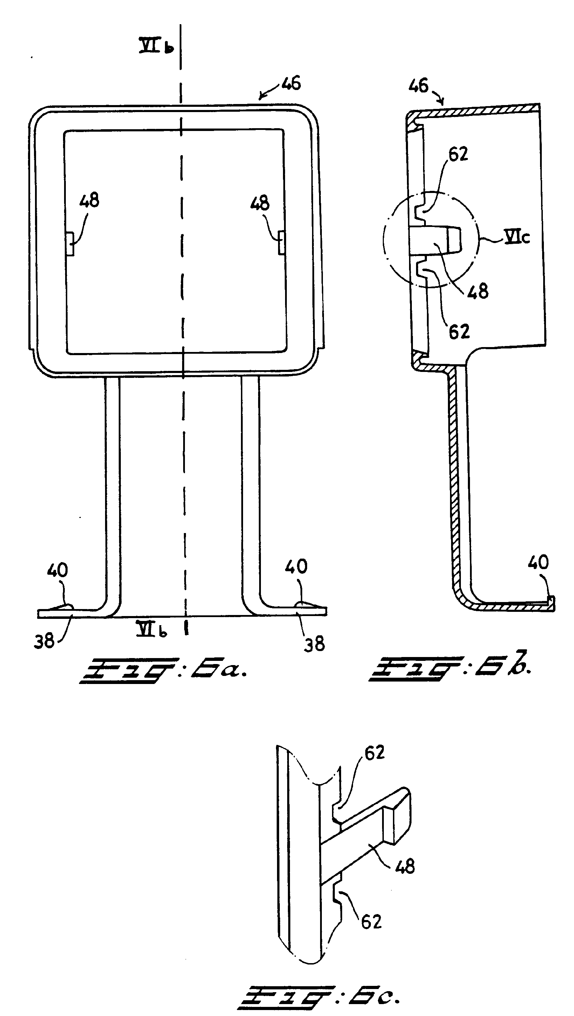

This manner of fixing is explained with reference to Fig. 5, in which a cross-section of the corner connecting element 36 along the line V-V in Figure 4a, is shown. Fig. 5 for the rest is self-explanatory.

For the functioning of the lips 42, the two conduit ends have to be shortened in a mitre, for example along a line 43.

The lips 40 ensure that removal of the element equipped therewith can take place only with the use of a tool, for example with a screwdriver, with which, resting on the cover section 22, a finger 38 can be raised so that the lip 40 no longer slots behind the hooked edge 24 of the cover section 22, and the element can be removed.

Figs. 4b and 4c further show break ports 44 by means of which the corner connecting element 36 provides various additional possibilities for making connections and branches.

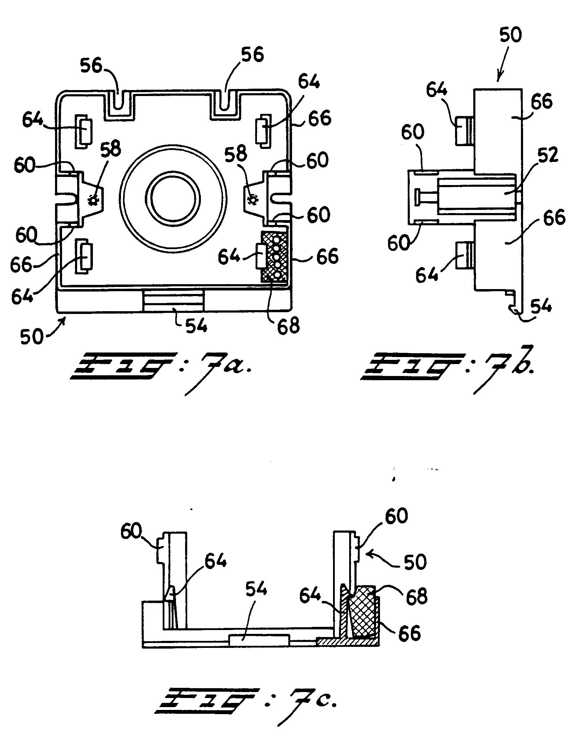

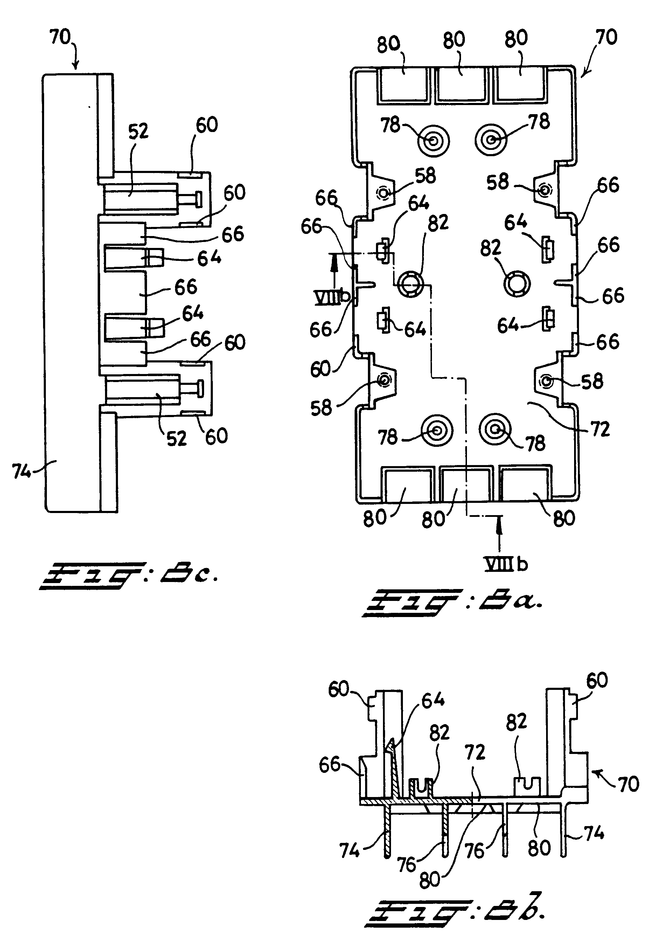

Figs. 6a and 6b show views of a covering auxiliary element 46 which is intended for covering a junction and/or connecting a terminal box placed next to a duct. Like the corner connecting element 36, the covering auxiliary element 46 is provided with fingers 38 with lips 40, but at only one side of the duct. Formed in the opening of the covering element 46 are two resilient hook elements 48, one of which is shown in a perspective view in Fig. 6c. These hook elements 48 can engage in hollows of a baseplate auxiliary element to be described below, for example hollows 52 of a baseplate auxiliary element 50 of Fig. 7b.

The baseplate auxiliary element 50, which is shown in various views in Figs. 7a, 7b and 7c, is intended for making connections or joints and is fitted next to a duct. Fitting takes place by placing the baseplate auxiliary element with the hook 54 under an end edge 20 of a base section 2, and the baseplate auxiliary element 50 is then fixed to a base, for example by means of screws in slots 56.

The baseplate auxiliary element 50 is also provided with bushes 58 into which screws can be screwed for fixing a cover plate or a socket element.

Projections 60 serving as stops are also fitted, said projections falling into recesses 62 in a covering auxiliary element 46 when a covering auxiliary element 46 is placed over a baseplate auxiliary element 50.

Finally, the baseplate auxiliary element 50 has resilient hook elements 64 and walls 66 for fixing insert joint connectors 68 by means of a snap connection. All the above-mentioned snap connections, in which hooks are used, are very easy to achieve by hand, but can be broken only by means of tools.

Figs. 8a, 8b and 8c show different views of a double junction box auxiliary element 70, intended for fitting on a base section 2 according to the invention, the bottom 72 then being in a position which is otherwise taken up by the top face of the cover section 22. The bottom 72, like the top face of the cover section 22, has moulded-on partitions 74 and 76 which have the same function as the partitions 26 and 28. The junction box auxiliary element 70 is fixed on a base by means of screws which are inserted through holes 78 and holes in the base section 2. The position of the holes 78 is selected in such a way that the underlying holes in the base section 2 are situated between the ducts 3 thereof, which means that there is no risk of damage to leads during fitting of the junction box auxiliary element 70. Of course, each partition 76 is interrupted at the position of the holes 78.

Figs. 8b and 8c further show break ports 80 which are situated above the ducts 3 in the base section 2, and through which branches from a specific duct 3 can be made selectively while maintaining the galvanical separation from the remaining ducts 3. Finally, the last-mentioned figures show means 82 for fixing elements, for example a cover plate, on the junction box auxiliary element 70. Such a cover plate replaces the locally missing two side walls of the cover section 2 and also ensures that the junction box auxiliary element 70 is in a closed space.

## Claims

1. Duct system for electric leads, in particular of different groups, comprising a base section (2) and a cover section (22) which can be detachably connected to the base section, which base section has in the lengthwise direction of the bottom (4) thereof a number of upright, convex curved walls (6, 8, 6', 8', 6'', 8'') going out from the bottom (4), said walls defining ducts (3) which are open at the side facing away from the bottom (4), characterized in that each duct (3) of the base section (2) is formed by a pair of the walls (6, 8, 6', 8', 6'', 8'') ending at a predetermined distance from the cover section (22) when this is fitted, and being situated at a distance from an adjacent pair of walls, while the cover section (22) has in the lengthwise direction thereof a number of partitions (28) going out from the cover section and extending between the pairs of walls of adjacent ducts (3) of the base section (2).

2. System according to claim 1, characterized in that the base section (2) bears at each longitudinal edge a flange (20) with a substantially J-shaped cross-section, the long leg of which being connected to the edge of the base section.

3. System according to claim 1 or 2, characterized by an auxiliary element designed as an elongated, resilient coupling element (32) with a C-shaped cross-section, the transverse dimensions of which are such that the coupling element (32) can be clamped in and/or on a duct (3) of the base section (2).

4. System according to claim 3, characterized in that the coupling element (32) is provided with break lines (34) running in the transverse direction thereof.

5. System according to any of claims 1-4,
characterized by auxiliary elements (36, 46) which can grip around a cover section (22), said fittings (36, 46) having fingers (38) which are provided with lips (40) which are adapted to engage behind the cover section (22).

6. System according to any of claims 1-5,
characterized by a junction and/or connecting auxiliary element (70), the bottom (72) of which with the partitions (74, 76) connected thereto can act as the top face of the cover section (22), and the bottom (72) of which is provided with break ports (80) fitted above the ducts (3).

7. System according to any of claims 1-6,
characterized by a junction and/or connecting auxiliary element (50) which is fitted next to the base section (2) and is provided with a hook (54) which is adapted to engage behind the flange (20) of the base section (2).

8. System according to claim 6 or 7, characterized in that the junction and/or connecting auxiliary element (50, 70) has a hooked element (64) behind which a joint connector (68) can be clamped.

## Patentansprüche

1. Kanalsystem für elektrische Leitungen, insbesondere von verschiedenen Gruppen, umfassend einen Basisabschnitt (2) und einen Abdeckabschnitt (22), der abnehmbar mit dem Basisabschnitt verbindbar ist, welcher Basisabschnitt in der Längsrichtung seines Bodens (4) eine Anzahl von aufrechten, konvex gekrümmten Wänden (6, 8, 6', 8', 6'', 8'') aufweist, die von dem Boden (4) ausgehen, welche Wände Kanäle (3) bilden, die an der Seite, die von dem Boden (4) weg weist, offen sind, dadurch gekennzeichnet, daß jeder Kanal (3) des Basisabschnittes (2) durch ein Paar von Wänden (6, 8, 6', 8', 6'', 8'') gebildet ist, die in einem vorbestimmten Abstand zum Abdeckabschnitt (22) enden, wenn dieser angebracht ist, und die in einem Abstand von einem benachbarten Paar von Wänden angeordnet sind, während der Abdeckabschnitt (22) in seiner Längsrichtung eine Anzahl von Zwischenwänden (28) aufweist, die von dem Abdeckabschnitt ausgehen und sich zwischen den Paaren von Wänden von benachbarten Kanälen (3) des Basisabschnittes (2) erstrecken.

2. System nach Anspruch 1, dadurch gekennzeichnet, daß der Basisabschnitt (2) an jeder Längskante einen Flansch (20) mit einem im wesentlichen J-förmigen Querschnitt aufweist, wobei dessen langer Schenkel mit der Kante des Basisabschnittes verbunden ist.

3. System nach Anspruch 1 oder 2, gekennzeichnet durch ein Hilfselement, das als langgestrecktes, federndes Kopplungselement (32) mit einem C-förmigen Querschnitt ausgestaltet ist, dessen transversale Dimensionen derart sind, daß das Kopplungselement (32) in und/oder auf einen Kanal (3) des Basisabschnittes (2) klemmbar ist.

4. System nach Anspruch 3, dadurch gekennzeichnet, daß das Kopplungselement (32) mit Sollbruchlinien (34) versehen ist, die in seiner transversalen Richtung verlaufen.

5. System nach einem der Ansprüche 1 bis 4, gekennzeichnet durch Hilfselemente (36, 46), die um einen Abdeckabschnitt (22) herumgreifen können, wobei die besagten Paßstücke (36, 46) Finger (38) aufweisen, die mit Lippen (40) versehen sind, die dazu ausgelegt sind, den Abdeckabschnitt (22) zu hintergreifen.

6. System nach einem der Ansprüche 1 bis 5, gekennzeichnet durch ein Stoß- und/oder Verbindungshilfselement (70), dessen Boden (72) mit den damit verbundenen Zwischenwänden (74, 76) als Abdeckfläche des Abdeckabschnittes (22) wirken kann und dessen Boden (72) mit Ausbruchöffnungen (80) versehen ist, die oberhalb der Kanäle (3) angebracht sind.

7. System nach einem der Ansprüche 1 bis 6, gekennzeichnet durch ein Stoß- und/oder Verbindungshilfselement (50), das nahe dem Basisabschnitt (2) angebracht und mit einem Haken (54) versehen ist, der dazu ausgelegt ist, den Flansch (20) des Basisabschnittes (2) zu hintergreifen.

8. System nach Anspruch 6 oder 7, dadurch gekennzeichnet, daß das Stoß- und/oder Verbindungshilfselement (50, 70) ein Hakenelement (64) aufweist, hinter das ein Stoßverbinder (68) klemmbar ist.

## Revendications

1. Système de conduit pour des conducteurs électriques, en particulier appartenant à différents groupes, comprenant une section de base (2) et une section de couvercle (22) susceptibles d'être raccordées de façon amovible à la section de base, ladite section de base présentant, dans la direction longitudinale de son fond (4), un certain nombre de parois incurvées de manière convexe, s'étendant vers le haut (6, 8, 6', 8', 6'', 8'') partant dudit fond (4), lesdites parois définissant des conduits (3) qui sont ouverts du côté opposé au fond (4), caractérisé en ce que chaque conduit (3) de la section de base (2) est constitué d'une paire de parois (6, 8, 6', 8', 6'', 8'') se terminant à une distance prédéterminée de la section de couvercle (22) quand celle-ci est montée et étant situé à distance d'une paire adjacente de parois, tandis que la section de couvercle (22) présente, dans sa direction longitudinale, un certain nombre de cloisons (28) qui partent de la section de couvercle et s'étendent entre les paires de parois des conduits adjacents (3) de la section de base (2).

2. Système selon la revendication 1, caractérisé en ce que la section de base (2) porte, à chaque bord longitudinal, un rebord (20) dont la section transversale est sensiblement en forme de J, dont la branche longue est reliée au bord de la section de base.

3. Système selon la revendication 1 ou 2, caractérisé par un élément auxiliaire conçu comme un élément allongé et élastique de couplage (32) à section transversale en forme de C, et dont les dimensions transversales sont telles que l'élément de couplage (32) puisse être serré dans et/ou sur un conduit (3) de la section de base (2).

4. Système selon la revendication 3, caractérisé en ce que l'élément de couplage (32) est muni de lignes de rupture (34) disposées dans la direction transversale dudit élément.

5. Système selon l'une quelconque des revendications 1 à 4, caractérisé par des éléments auxiliaires (36, 46) qui peuvent s'accrocher autour d'une section de couvercle (2), lesdits éléments auxiliaires (36, 46) présentant des doigts (38) munis de lèvres (40) susceptibles de s'engager derrière la section de couvercle (22).

6. Système selon l'une quelconque des revendications 1 à 5, caractérisé par un élément auxiliaire de jonction et/ou de raccordement (70), dont le fond (72), avec les cloisons de séparation (74, 76) qui lui sont raccordées, est susceptible de remplir le rôle de face supérieure de la section de couvercle (22), et dont le fond (72) est muni de passages susceptibles d'être ouverts par rupture (80) et disposés au-dessus des conduits (3).

7. Système selon l'une quelconque des revendications 1 à 6, caractérisé par un élément auxiliaire de jonction et/ou de raccordement (50), qui est monté à côté de la section de base (2) et est muni d'un crochet (54) susceptible de s'engager derrière le rebord (20) de la section de base (2).

8. Système selon la revendication 6 ou 7, caractérisé en ce que l'élément auxiliaire de jonction et/ou de raccordement (50, 70) comporte un élément à crochet (64) derrière lequel peut être retenu par pincement un connecteur de jonction (68).
